# EUROPEAN PATENT APPLICATION

(11) **EP 2 857 613 A1**
(43) Date of publication of application: **08.04.2015**
(21) Application number: 13797708.8
(22) Date of filing: 21.05.2013
(51) Int. Cl.: E04H 5/00, H01L 31/042

(54) **PHOTOVOLTAIC PANEL UNIT, PHOTOVOLTAIC POWER GENERATION SYSTEM, AND METHOD FOR INSTALLING PHOTOVOLTAIC POWER GENERATION SYSTEM**

(30) Priority: 31.05.2012 JP 2012124319
(71) Applicant: Daikin Industries, Ltd., Osaka 530-8323 (JP)
(72) Inventor: SAKAI, Toshiyuki, Osaka-shi, Osaka 530-8323 (JP); MATSUURA, Tetsuya, Osaka-shi, Osaka 530-8323 (JP); YASUI, Yoshitaka, Osaka-shi, Osaka 530-8323 (JP)
(74) Representative: Goddar, Heinz J.
(86) International application number: PCT/JP2013/003238
(87) International publication number: WO 2013/179608

(57) **Abstract**

In a solar panel unit (2) including: a pedestal (50) that includes a support (51) supporting a rotation shaft (41) fixed to a solar panel (11) and is fixed to the ground; and a drive mechanism (5) that rotates the solar panel (11) about the axis of the rotation shaft (41) in accordance with the direction of the sun, the pedestal (50) is a stake (55) having an upper end provided with the support (51) and a lower end to be buried in the ground, and the depth to which the stake (55) is pushed is adjusted. Thus, the heights of the pedestal (50) can be adjusted. In this manner, the solar panel unit (2) can be easily placed at an accurate position without ground leveling, and a plurality of link mechanisms (30) can be easily joined together.

## Description

### TECHNICAL FIELD

The present invention relates to a solar panel unit including a solar panel and a drive mechanism for driving and rotating the solar panel, a solar photovoltaic system including a plurality of such solar panel units, and a method for installing the solar photovoltaic system outdoors.

### BACKGROUND ART

Typical solar panel units include solar panels and actuators for rotating the solar panels. In such a solar panel unit, the actuator rotates the solar panel such that the light-receiving surface of the solar panel follows the direction of the sun, and thereby, the amount of power generated by the solar panel is larger than that generated by a panel-fixed type. As a solar panel unit of this type, Patent Document 1, for example, describes a solar panel unit including a heat receiving tank of a closed container filled with operating fluid and an actuator that operates under a pressure of operating fluid that receives radiant heat from sunlight and expands in the heat receiving tank. The actuator includes a piston having one end fixed to the solar panel. The piston reciprocates under a pressure of operating fluid so that the solar panel rotates.

The solar panel unit of Patent Document 1 is a unit in which one solar panel is held by one pedestal. In the case of installing a plurality of solar panels, the same number of pedestals as that of the solar panels are provided to assemble a plurality of solar panel units. The solar panels are driven for the individual solar panel units.

The inventors of the present application have already filed an application regarding a system for installing a plurality of solar panels. In this system, a link mechanism couples a solar panel unit including an actuator and a solar panel unit including no actuator, and a drive mechanism drives a plurality of solar panels with one actuator (see Japanese Patent Application No. 2011-122553).

### CITATION LIST

### PATENT DOCUMENT

PATENT DOCUMENT 1: Japanese Unexamined Patent Publication No. H06-301420

### SUMMARY OF THE INVENTION

### TECHNICAL PROBLEM

If a plurality of solar panel units of Patent Document 1 are placed on the ground and are coupled together by link mechanisms, the number of actuators is supposed to decrease so that cost can be reduced. However, since all the pedestals have the same shape in general, if the solar panel units are placed on the ground with an uneven surface level, the positions of the link mechanisms of the units to be coupled are misaligned. To prevent the misalignment, in the case of installing a plurality of solar panel units, ground leveling is performed before the installation in order to make the ground level uniform, resulting in a complicated installation process. In addition, in a typical solar panel unit, the installation area of pedestals is large, and thus, ground leveling is required even for installation of only one unit.

It is therefore an object of the present invention to enable a solar panel unit to be installed at an accurate height without ground leveling and, even in the case of installing a plurality of solar panel units, the heights of solar panels can be accurately aligned easily.

### SOLUTION TO THE PROBLEM

A first aspect is directed to a solar panel unit (2, 3) including: a solar panel (11); a rotation shaft (41) fixed to the solar panel (11); a pedestal (50) that includes a support (51) supporting the rotation shaft (41) and is fixed to ground (G); and a drive mechanism (5) that rotates the solar panel (11) about an axis of the rotation shaft (41) in accordance with a direction of sun.

In the solar panel unit (2, 3), the pedestal (50) is a stake (55) having an upper end provided with the support (51) and a lower end to be buried in the ground (G).

In the first aspect, the stake (55) is pushed into the ground (G), thereby fixing the pedestal (50) to the ground (G). The stake (55) serving as the pedestal (50) has an upper end provided with the support (51) that supports the rotation shaft (41), and the solar panel (11) is fixed to the rotation shaft (41). The solar panel (11) is driven by the drive mechanism (5) provided in the solar panel unit (2, 3), and the angle thereof relative to the pedestal (50) is adjusted in accordance with the direction of the sun. In this manner, the angle of the solar panel (11) changes following the movement of the sun, thereby efficiently generating electric power.

A second aspect is directed to a solar photovoltaic system (1) including: a plurality of solar panel units (2, 3) of the first aspect.

In the solar photovoltaic system (1), the plurality of solar panel units (2, 3) include a first solar panel unit (2) serving as a driving unit and including the drive mechanism (5) including an actuator (20) that drives a solar panel (11) and a link mechanism (30) configured to synchronize rotation of a plurality of solar panels (11) and a plurality of second solar panel units (3) serving as driven units and including the drive mechanism (5) including no actuators (20) that drive solar panels (11) and including link mechanisms (30) configured to synchronize rotation of solar panels (11), and the first solar panel unit (2) and the plurality of second solar panel units (3) are connected together by a link joint rod (6).

In the second aspect, the actuator (20) provided in the first solar panel unit (2) adjusts the angle of the solar panel (11) of the first solar panel unit (2). The driving power of the actuator (20) is also transmitted to the solar panels (11) of the second solar panel units (3) through the link mechanisms (30) and the link joint rod (6). In this manner, movement of the solar panel (11) of the first solar panel unit (2) synchronizes with movement of the solar panels (11) of the second solar panel units (3). In the second aspect, the height of each of the solar panel units (2, 3) is adjusted by adjusting the pushing depth of the stake (55).

In a third aspect, the solar photovoltaic system of the second aspect includes: a positioning mechanism (60) that adjusts positions of the pedestals (50) such that the pedestals (50) of the plurality of solar panel units (2, 3) have an identical height and are aligned.

In a fourth aspect, in the solar photovoltaic system of the third aspect, the positioning mechanism (60) includes through holes (61) formed in the stakes (55) such that laser light passes through an identical location in the pedestals (50) of the plurality of solar panel units (2, 3).

In the third and fourth aspects, in installing the solar panel units (2, 3), the positioning mechanism (60) including, for example, the through holes (61) in the stakes (55) and a unit for generating laser light that passes through the through holes (61) is used so that the pedestals (50) of the solar panel units (2, 3) are suitably positioned.

A fifth aspect is directed to a method for installing a solar photovoltaic system (1) such that the plurality of solar panel units (2, 3) of the third aspect are placed on ground.

This method includes: an alignment process of pushing stakes (55) constituting pedestals (50) of the plurality of solar panel units (2, 3) into ground (G) and aligning the stakes (55) such that the stakes (55) have an identical height; an installation process of mounting solar panels (11) on the pedestals (50); and a joint process of joining the plurality of solar panel units (2, 3) together with a link joint rod (6), and the alignment process, the installation process, and the joint process are sequentially performed.

A sixth aspect is directed to a method for installing a solar photovoltaic system (1) such that the plurality of solar panel units (2, 3) of the fourth aspect are placed on ground.

This method includes: an alignment process of pushing stakes (55) constituting pedestals (50) of the plurality of solar panel units (2, 3) into ground (G) and aligning the stakes (55) such that the stakes (55) have an identical height; an installation process of mounting solar panels (11) on the pedestals (50); and a joint process of joining the plurality of solar panel units (2, 3) together with a link joint rod (6). The alignment process, the installation process, and the joint process are sequentially performed, and in the alignment process, laser light is caused to pass through the through holes (61) formed in the stakes (55) so that the pedestals (50) of the plurality of solar panel units (2, 3) are positioned.

In the fifth and sixth aspects, the alignment process, the installation process, and the joint process are sequentially performed, thereby suitably positioning a plurality of solar panel units (2, 3).

### ADVANTAGES OF THE INVENTION

According to the present invention, the pedestal (50) of each of the solar panel units (2, 3) is constituted by one stake (55). Thus, the pedestal (50) can be installed only by pushing the stake (55) into the ground (G). The height of the solar panel (11) can be accurately adjusted relative to the ground (G) by adjusting the depth to which the stake (55) is pushed into the ground (G). Thus, in the present invention, the solar panel units (2, 3) can be installed at an accurate height without ground leveling of the ground (G). In the case of installing a plurality of solar panel units (2, 3), the heights of the solar panels (11) can be accurately aligned easily.

In the second aspect, in a manner similar to the first aspect, in installing the solar panel units (2, 3), the depth to which the stake (55) is pushed into the ground (G) is adjusted, thereby easily aligning the heights of the solar panels (11). In the state where the solar panel units (2, 3) are installed, since the heights of the link mechanisms (30) of the solar panel units (2, 3) are aligned, smooth movement of the solar panels (11) connected by the link joint rod (6) can be ensured. In the second aspect, the process of levelling the ground (G) in installing the solar panel units (2, 3) is not necessary, and thus, the installation process is simplified so that the cost can be reduced.

In the third and fourth aspects, in installing the solar panel units (2, 3), the positioning mechanism (60) including, for example, the through holes (61) formed in the stakes (55) and a laser light unit for generating laser light that passes through the through holes (61) is used so that the pedestals (50) of the solar panel units (2, 3) can be suitably positioned, and thus, the installation process can be more easily performed.

In the fifth and sixth aspects, the alignment process, the installation process, and the joint process are sequentially performed, thereby making it possible to install a plurality of solar panel units (2, 3) easily while ensuring suitable positioning. In the alignment process, it is sufficient only to push the stakes (55) serving as the pedestals (50) into the ground (G). Thus, ground leveling is not needed. The use of the positioning mechanism (60) ensures easy alignment of the solar panel units (2, 3).

### BRIEF DESCRIPTION OF THE DRAWINGS

[FIG. 1] FIG. 1 is a perspective view illustrating a solar photovoltaic system according to an embodiment of the present invention.
[FIG. 2] FIG. 2 is a perspective view of a first solar panel unit.
[FIG. 3] FIG. 3 is a perspective view of a second solar panel unit.
[FIG. 4] FIG. 4 is a disassembled perspective view of the first solar panel unit.
[FIG. 5] FIG. 5 is a disassembled perspective view of the second solar panel unit.
[FIG. 6] FIG. 6 is a schematic side view of the first solar panel unit.
[FIG. 7] FIG. 7 is a schematic side view of the second solar panel unit.
[FIG. 8] FIG. 8 is a side view illustrating a state in which a solar panel unit is installed on the ground.

### DESCRIPTION OF EMBODIMENTS

An embodiment of the present invention will be described with reference to the drawings.

This embodiment relates to a solar photovoltaic system including a plurality of solar panels whose angles are adjusted depending on the location of the sun.

### (System Configuration)

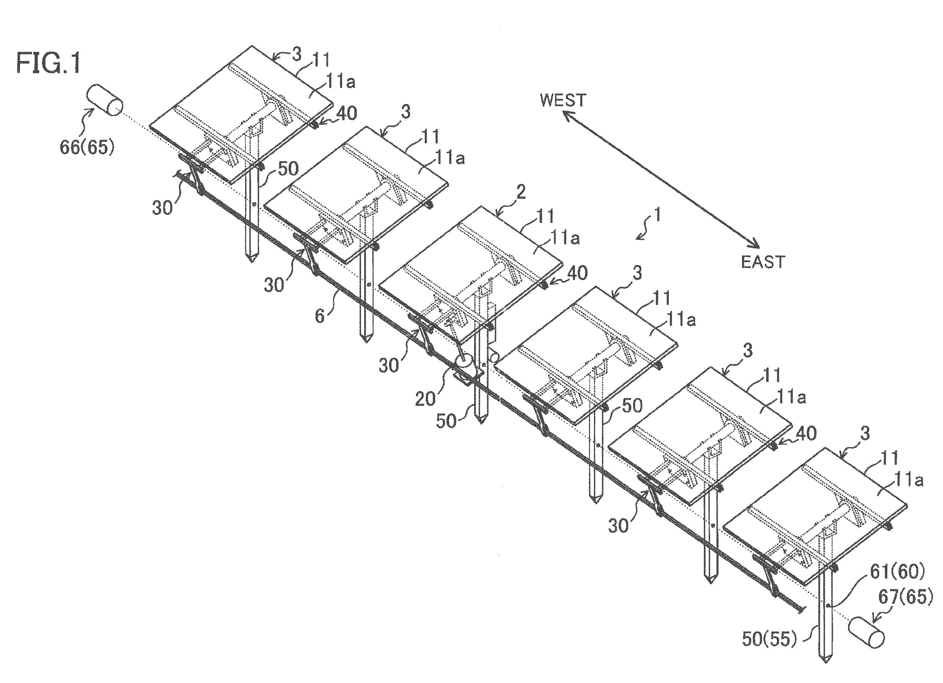

As illustrated in FIG. 1, a solar photovoltaic system (1) of this embodiment includes a plurality of solar panel units (2, 3). In this embodiment, the solar photovoltaic system (1) is constituted by six solar panel units (2, 3). A plurality of such solar photovoltaic systems (1) are combined so as to constitute a large-scale solar photovoltaic system called a mega solar system. Although not shown, the solar photovoltaic system (1) includes a power conditioner that converts a direct-current (DC) electric power generated by the solar panel units (2, 3) into alternating-current (AC) electric power.

First, the solar panel units (2, 3) will be described. The solar photovoltaic system (1) of this embodiment includes a combination of one first solar panel unit (2) and five second solar panel units (3). Each of the solar panel units (2, 3) is configured such that a solar panel (11) for generating DC power from the sunlight is rotated in the east-west direction while following the movement of the sun. The solar panel units (2, 3) are aligned in the east-west direction.

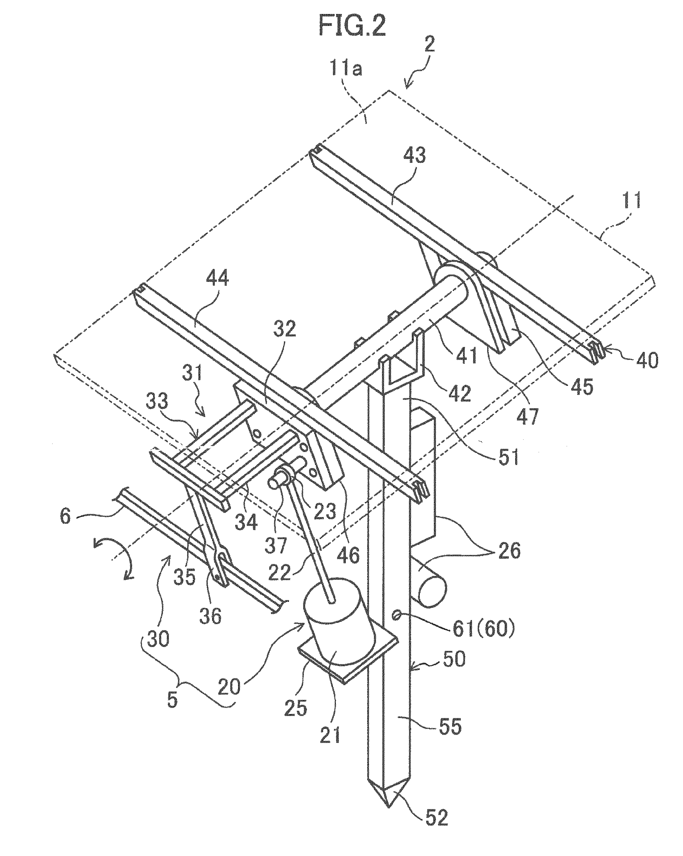

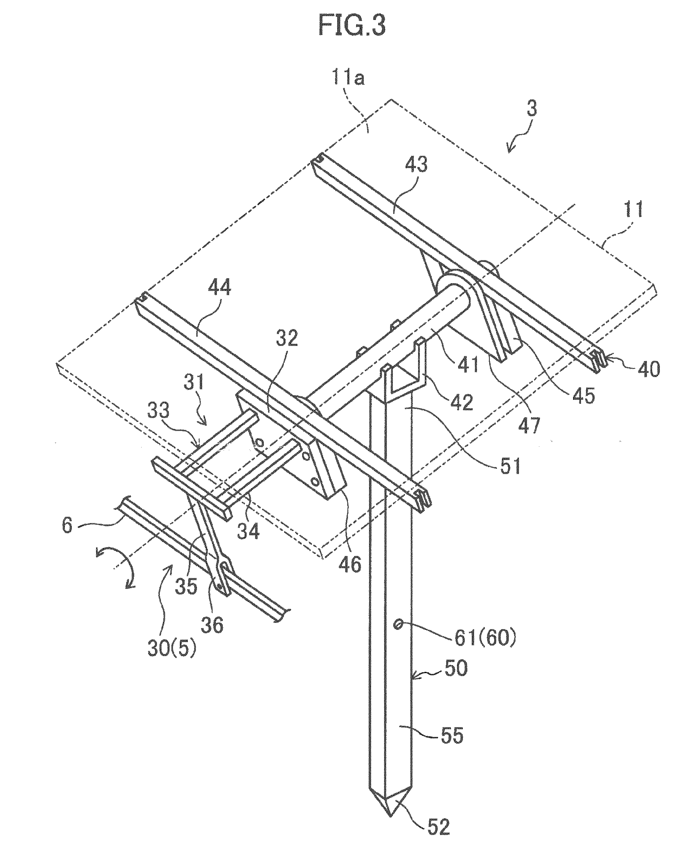

The first solar panel unit (2) illustrated in FIG. 2 includes an actuator (20) for driving the solar panel (11) and a link mechanism (30) configured to synchronize rotation movements of the solar panels (11) of the solar panel units (2, 3). The actuator (20) and the link mechanism (30) constitute a drive mechanism (5). The second solar panel units (3) illustrated in FIG. 3 includes no actuators (20) for driving the solar panels (11), and includes only link mechanisms (30) configured to synchronize rotation movements of the solar panels (11) as drive mechanisms (5).

The link mechanisms (30) of the solar panel units (2, 3) are joined by a link joint rod (6), and movement of the solar panel (11) of the first solar panel unit (2) is transmitted to the solar panels (11) of the second solar panel units (3). That is, in this embodiment, the first solar panel unit (2) serves as a driving unit, and the second solar panel units (3) serve as driven units.

The first solar panel unit (2) and the second solar panel units (3) have substantially the same configuration except for the presence of the actuator (20). Specifically, each of the solar panel units (2, 3) includes the solar panel (11), a rotation shaft (41) fixed to the solar panel (11), a pedestal (50) that includes a support (51) supporting the rotation shaft (41) and is fixed to the ground (G), and the drive mechanism (5) that rotates the solar panel (11) about the axis of the rotation shaft (41) in accordance with the direction of the sun.

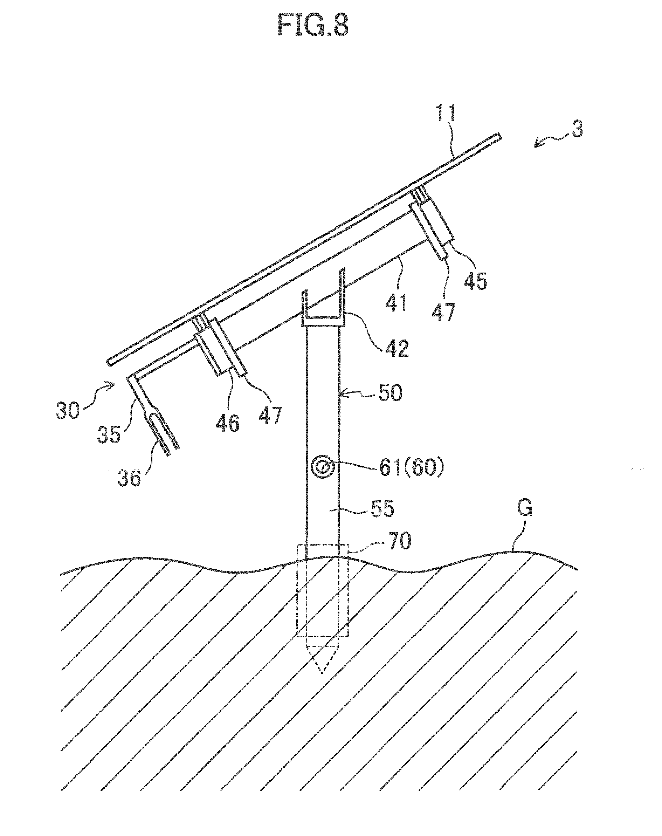

In this embodiment, the pedestal (50) is a stake (55) having an upper end provided with the support (51) and a lower end serving as a pointed tip (52) to be buried in the ground (G). The support (51) has a clamp (not shown) for holding a holder (42) fixed to the rotation shaft (41). As illustrated in FIG. 8, the positions of the solar panel units (2, 3) of this embodiment are fixed by pushing the stakes (55) into the ground (G) with fixing sleeves (70) on the ground (G) and fixing the stakes (55) with mortar.

In FIGS. 2 and 3, the solar panels (11) have approximately flat plate shapes, and the upper surfaces thereof are light-receiving surfaces (11a) that receive the sunlight. The solar panels (11) receive the sunlight on the light-receiving surfaces (11a) and, thereby, generate DC power. In FIGS. 2 and 3, the solar panels (11) are indicated as virtual lines for convenience.

Frames (40) are fixed to the back surfaces (the lower surfaces) of the solar panels (11). Each of the frames (40) is joined to an associated one of the pedestals (50) at a predetermined angle relative to the center axis of the stake (55) serving as the pedestal (50) so that the solar panel (11) is tilted relative to the stake (55). The frame (40) includes: the rotation shaft (41) extending along the tilt direction (i.e., the vertical direction) of the solar panel (11) and located at the center of the solar panel (11); and two bars (43, 44) fixed to the ends of the rotation shaft (41) and extending in the direction (i.e., the widthwise direction of the solar panel (11)) perpendicular to the axis of the rotation shaft (41). The bars (43, 44) are located at a position corresponding to ends of the rotation shaft (41).

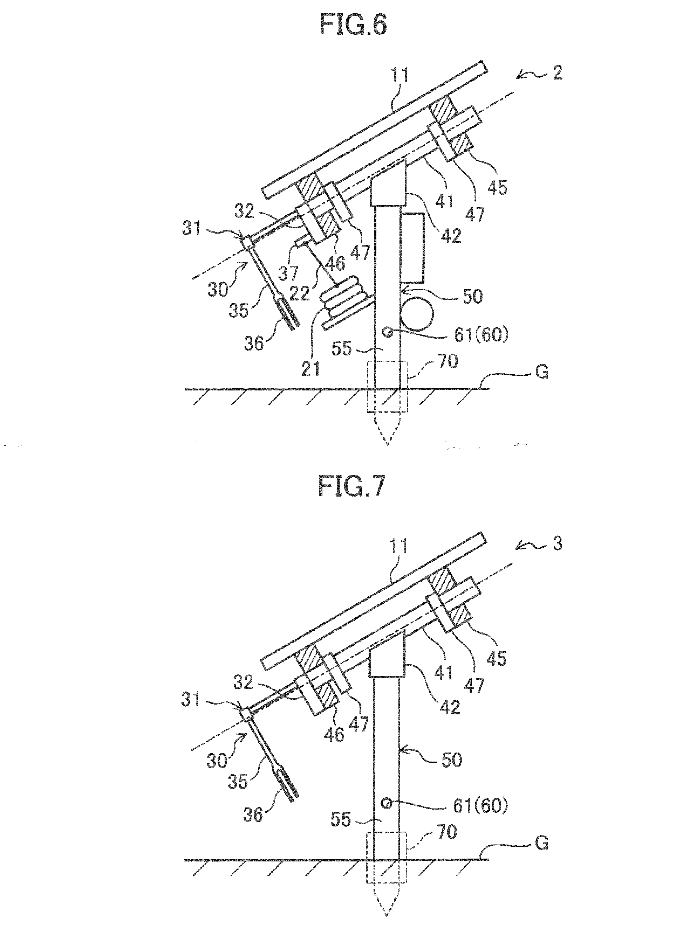

As illustrated in FIGS. 2, 4, and 6, which are respectively a perspective view, a disassembled perspective view, and a schematic side view of the first solar panel unit (2), and FIGS. 3, 5, and 7, which are respectively a perspective view, a disassembled perspective view, and a schematic side view of the second solar panel unit (3), bearing blocks (45, 46) for attaching the bars (43, 44) to the rotation shaft (41) such that the bars (43, 44) can rotate, are fixed to the lower surfaces of the bars (43, 44). Before the solar panel units (2, 3) are installed on the ground (G), the bars (43, 44) are fixed to the back surfaces of the solar panel (11), but the bearing blocks (45, 46) are separated from the bars (43, 44) or are temporarily fixed to the bars (43, 44).

The bearing blocks (45, 46) have bearing surfaces (45a, 46a) in which ends of the rotation shaft (41) are fitted. The rotation shaft (41) is provided with positioning plates (47) for positioning the bearing blocks (45, 46) in attaching the bearing blocks (45, 46) to the ends of the rotation shaft (41). Then, the bars (43, 44) are positioned to the ends of the rotation shaft (41), and the bearing blocks (45, 46) in which the ends of the rotation shaft (41) are fitted are fixed to the bars (43, 44). In this state, the bars (43, 44) are positioned relative to the rotation shaft (41) with the positioning plates (47), and are also fixed to the solar panel (11). Thus, the solar panel (11) is allowed to rotate along the periphery of the rotation shaft (41) but is not allowed to move along the axis of the rotation shaft (41).

With respect to the bearing blocks (45, 46) attached to the bars (43, 44), a link member (31) constituting the link mechanism (30) is fixed to the bearing block (46) for driving located below the solar panel (11) in the tilt direction. The link member (31) is an integrated member including a fastening plate (32) stacked on and fixed to the bearing blocks (45, 46) with fastening members (not shown) such as bolts and an arm (33) projecting from the fastening plate (32) to the left in the drawings along the axis of the rotation shaft (41). The arm (33) has an L shape composed of a base (34) projecting from the fastening plate (32) along the axis of the rotation shaft (41) and a connection part (35) projecting downward from the front end of the base (34). The lower end of the connection part (35) is a Y-shaped two-end joint (36), and the link joint rod (6) is fastened to the two-end joint (36).

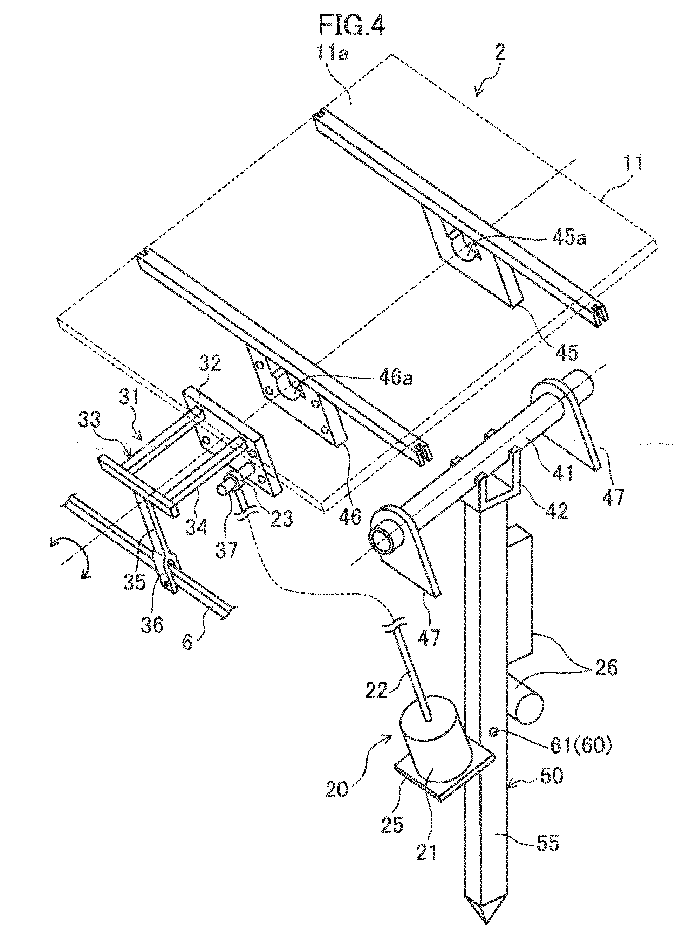

As illustrated in FIGS. 2 and 4, the first solar panel unit (2) as a driving unit includes an air cylinder (21) as an actuator (20) for adjusting the angle of the solar panel (11) relative to the rotation shaft (41). Although not specifically described regarding the configuration, in the air cylinder (21), an air bag is housed in a case and a cylinder rod (22) moves forward and backward in the case in accordance with expansion and contraction of the air bag. In the cylinder rod (22), a joint (not shown) is provided at a bottom portion near the case, and a portion of the cylinder rod (22) closer to the front end than the joint tilts with the forward and backward movements of the cylinder rod (22).

The rear end of the air cylinder (21) is fixed to a side surface of the stake (55), which is the pedestal (50), with a bracket (25) interposed therebetween. The front end (23) of the cylinder rod (22) of the air cylinder (21) is coupled to a rod coupling pin (37) provided in the fastening plate (32). When compressed air is supplied to the air cylinder (21), the cylinder rod (22) moves forward or backward, and the location of the rod coupling pin (37) changes accordingly. Accordingly, the solar panel (11) rotates about the rotation shaft (41).

The stake (55) of the first solar panel unit (2) has a cylinder driving part (26) for driving the air cylinder (21).

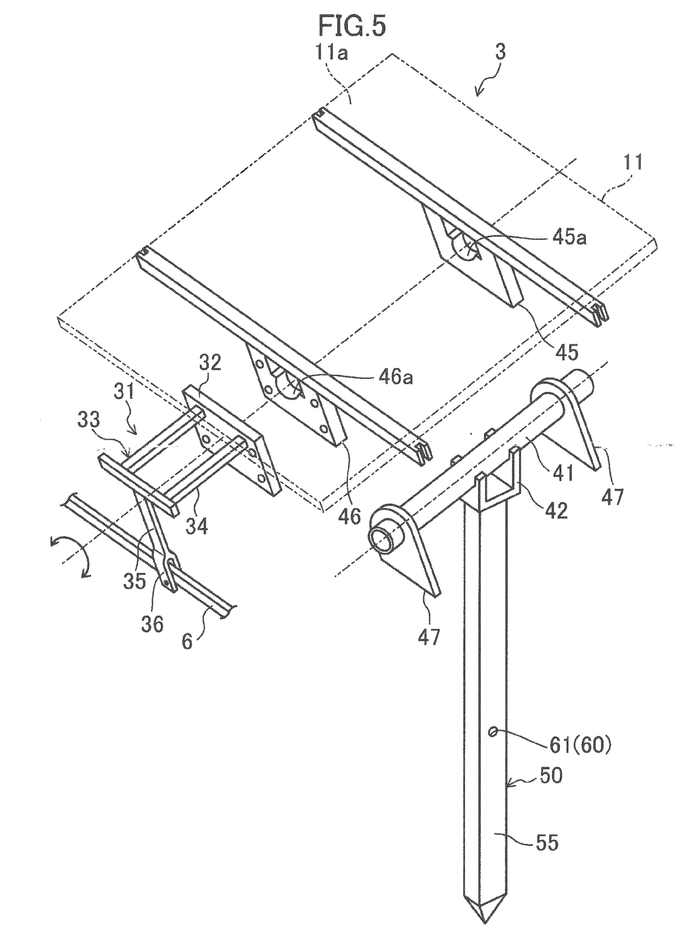

As illustrated in FIGS. 3 and 5, the second solar panel units (3) serving as driven units include no air cylinders (21) as actuators (20) and no brackets (25) for attaching the air cylinders (21) to the stakes (55) serving as the pedestals (50). The fastening plates (32) include no rod coupling pins (37).

The first solar panel unit (2) and the second solar panel units (3) are joined such that the connection parts (35) of the link members (31) are joined with the link joint rod (6). In this manner, movement of the solar panel (11) of the first solar panel unit (2) is transmitted to the solar panels (11) of the second solar panel units (3), and the solar panels (11) operate similarly.

The second solar panel units (3) as driven units do not need rod coupling pins (37), but may use fastening plates (32) provided with rod coupling pins (37) in order to share components with the fastening plate (32) of the first solar panel unit (2).

In the stakes (55) constituting the pedestals (50) of the first solar panel unit (2) and the second solar panel units (3), through holes (61) are formed as a positioning mechanism (60) at locations at the same distance from the upper ends of the stakes (55).

The through holes (61) are designed to align the pedestals (50) of the solar panel units (2, 3) in the east-west direction such that the solar panel units (2, 3) have an identical height in a state illustrated in FIG. 1 in which the first solar panel unit (2) and the second solar panel units (3) are installed. Specifically, to align the through holes (61) in the stakes (55), the solar photovoltaic system (1) of this embodiment employs a laser positioning unit (65) including a light transmitter (66) and a light receiver (67) for laser light, and the stakes (55) are positioned such that laser light showing straightness passes through the through holes (61). In this manner, the solar panel units (2, 3) are suitably positioned.

### (Method for Installing Solar Photovoltaic Generation System)

The solar photovoltaic system (1) is installed in the following manner.

First, in fixing the solar panel units (2, 3) to the ground (G), the stakes (55) and the solar panels (11) are not fixed, and sleeves (70) for piling are aligned in the east-west direction and buried in the ground (G). In this embodiment, as illustrated in FIG. 8, the level of the ground (G) is not specifically levelled, and does not need to be flat.

In this embodiment, the stakes (55) are inserted in the sleeves (70) and are pushed into the ground (G) so that the heights of the stakes (55) are made approximately uniform. In this state, the light transmitter (66) and the light receiver (67) of the laser positioning unit (65) are opposed to each other at the standard height of the through holes (61) in the stakes (55). Since laser light has straightness, if the stakes (55) are at the same height, laser light passes through all the through holes (61).

At this time, if laser light does not pass through the through hole (61) of one or more of the solar panel units (2, 3), this/these solar panel unit/units (2, 3) is/are determined to have different height from that of the other, and the height thereof is adjusted. After the heights of the stakes (55) of all the solar panel units (2, 3) are uniformized so that laser light can pass through all the through holes (61), the lower ends of the stakes (55) are fixed with mortar. Since the sleeves (70) are aligned in the east-west direction, once the through holes (61) are located at the same position, the stakes (55) have an identical height and are not tilted, and thus, the stakes (55) are fixed to the ground (G). The foregoing process is an alignment process of the present invention.

When the stakes (55) are fixed to the ground (G), then the frames (40) fixed to the back surfaces of the solar panels (11) are attached to the stakes (55) (an installation process). Specifically, the holders (42) of the frames (40) are clamped to the supports (51) of the stakes (55). Thus, the rotation shafts (41) are fixed to the stakes (55) serving as the pedestals (50). Since the solar panels (11) can rotate about the rotation shafts (41), the angle thereof can be adjusted relative to the stakes (55).

Next, the air cylinder (20) is attached to the pedestal (50) of the first solar panel unit (2). Specifically, the rear end of the air cylinder (20) is fixed to the side surface of the stake (55) with the bracket (25) interposed therebetween, and the front end of the cylinder rod (22) is coupled to the rod coupling pin (37) of the fastening plate (32) fixed to the bearing block (46) of the frame (40). In addition, the air cylinder (20) is connected to the cylinder driving part (26) so that compressed air is allowed to be supplied to the air cylinder (20).

Then, a joint process of joining the link joint rod (6) to the two-end joints (36) of the connection parts (35) of the link members (31) of the solar panel units (2, 3) with joint pins (not shown) is performed. By joining the link members (31) with the link joint rod (6), rotation movement of the solar panel (11) of the first solar panel unit (2) caused by driving the air cylinder (20) is transmitted to the solar panels (11) of the second solar panel units (3) through the link joint rod (6) and the link members (31). Thus, the solar panels (11) of all the solar panel units (2, 3) rotate in synchronization.

### -Operation-

In the solar photovoltaic system (1) of this embodiment, the angles of the solar panels (11) are adjusted in accordance with the direction of the sun.

The solar photovoltaic system (1) includes a solar radiation sensor (not shown), for example, in order to detect the direction of the sun. A controller (not shown) obtains an angle at which the solar panels (11) correspond to the direction of the sun, and the air cylinder (20) serving as the actuator (20) is controlled such that the angle of the solar panels (11) matches the obtained angle.

When the air cylinder (20) is driven so that the cylinder rod (22) moves forward or backward, the frame (40) rotates about the rotation shaft (41) and the solar panel (11) rotates accordingly. When the frame (40) of the first solar panel unit (2) rotates, this rotation movement is transmitted to the second solar panel units (3) through the link joint rod (6) and the link members (31). Then, the frames (40) and the solar panels (11) of the second solar panel units (3) move in a manner similar to that of the first solar panel unit (2), and the solar panels (11) of all the solar panel units (2, 3) are adjusted to the same angle in accordance with the direction of the sun.

In this manner, in this embodiment, all the solar panels (11) are oriented in accordance with the direction of the sun, and the incident angle of the sunlight to the solar panels (11) can be optimized, thereby efficiently performing solar photovoltaic generation.

### -Advantages of Embodiment-

In this embodiment, each of the pedestals (50) of the solar panel units (2, 3) is composed of one stake (55), and this stake (55) is pushed into the ground (G) so that the pedestals (50) are fixed to the ground (G). Thus, as illustrated in FIG. 8, the heights of the pedestals (50) can be uniformized without ground leveling even in a case where the ground (G) is not flat. Thus, the number of process steps necessary for ground leveling can be reduced, and thus, the solar photovoltaic system (1) can be easily installed, leading to cost reduction.

In the above embodiment, the through holes (61) are formed in the stakes (55) and laser light passes through the through holes (61). Thus, the solar photovoltaic system (1) can be easily installed with the heights of the six solar panel units (2, 3) uniformized.

In addition, the laser positioning unit (65) is not used only for installation of the solar photovoltaic system (1) and may be used for regularly detecting a displacement among the pedestals (50) after a lapse of each predetermined time during operation of the solar photovoltaic system (1), for example. Then, the stability of operation of the solar photovoltaic system (1) can be enhanced.

### «Other Embodiment»

The above embodiment may have the following configuration.

For example, in the embodiment, the laser positioning unit (65) is used for suitable positioning of the solar panel units (2, 3). Alternatively, the pedestals (50) may be suitably positioned by using other means except laser light.

The configurations of the frames (40) and the link members (31) are merely examples, and may be modified or changed as long as one pedestal (50) is one stake (55) in the present invention.

In the above embodiment, the six solar panel units (2, 3) constitute the solar photovoltaic system (1). However, the number of solar panel units (2, 3) may change depending on, for example, electric power necessary for the system.

Further, even in a case where the system uses one first solar panel unit (2) with a drive mechanism and no second solar panel units (3), making the pedestals (50) with one stake (55) enables the system of the embodiment to be more easily installed than a typical system using large pedestals (50).

The foregoing embodiment is merely illustrative in nature, and is not intended to limit the scope, applications, and use of the invention.

### INDUSTRIAL APPLICABILITY

As described above, the present invention is useful for a solar panel unit including a solar panel and a drive mechanism for driving and rotating the solar panel, a solar photovoltaic system using a plurality of such solar panel units, and a method for installing the solar photovoltaic system outdoors.

### DESCRIPTION OF REFERENCE CHARACTERS

1 solar photovoltaic system
2 first solar panel unit
3 second solar panel unit
5 drive mechanism
6 link joint rod
11 solar panel
20 actuator
30 link mechanism
41 rotation shaft
50 pedestal
51 support
55 stake
60 positioning mechanism
61 through hole
G ground

## Claims

1. A solar panel unit comprising:
a solar panel (11);
a rotation shaft (41) fixed to the solar panel (11);
a pedestal (50) that includes a support (51) supporting the rotation shaft (41) and is fixed to ground (G); and
a drive mechanism (5) that rotates the solar panel (11) about an axis of the rotation shaft (41) in accordance with a direction of sun, wherein
the pedestal (50) is a stake (55) having an upper end provided with the support (51) and a lower end to be buried in the ground (G).

2. A solar photovoltaic system comprising:
a plurality of solar panel units (2, 3) of claim 1, wherein
the plurality of solar panel units (2, 3) include
a first solar panel unit (2) serving as a driving unit and including the drive mechanism (5) including an actuator (20) that drives a solar panel (11) and a link mechanisms (30) configured to synchronize rotation of a plurality of solar panels (11) and
a plurality of second solar panel units (3) serving as driven units and including the drive mechanism (5) including no actuators (20) that drive solar panels (11) and including link mechanisms (30) configured to synchronize rotation of solar panels (11), and
the first solar panel unit (2) and the plurality of second solar panel units (3) are connected together by a link joint rod (6).

3. The solar photovoltaic system of claim 2, comprising:
a positioning mechanism (60) that adjusts positions of the pedestals (50) such that the pedestals (50) of the plurality of solar panel units (2, 3) have an identical height and are aligned.

4. The solar photovoltaic system of claim 3, wherein
the positioning mechanism (60) includes through holes (61) formed in the stakes (55) such that laser light passes through an identical location in the pedestals (50) of the plurality of solar panel units (2, 3).

5. A method for installing a solar photovoltaic system such that the plurality of solar panel units (2, 3) of claim 3 are placed on ground, the method comprising:
an alignment process of pushing stakes (55) constituting pedestals (50) of the plurality of solar panel units (2, 3) into ground (G) and aligning the stakes (55) such that the stakes (55) have an identical height;
an installation process of mounting solar panels (11) on the pedestals (50); and
a joint process of joining the plurality of solar panel units (2, 3) together with a link joint rod (6), wherein
the alignment process, the installation process, and the joint process are sequentially performed.

6. A method for installing a solar photovoltaic system such that the plurality of solar panel units (2, 3) of claim 4 are placed on ground, the method comprising:
an alignment process of pushing stakes (55) constituting pedestals (50) of the plurality of solar panel units (2, 3) into ground (G) and aligning the stakes (55) such that the stakes (55) have an identical height;
an installation process of mounting solar panels (11) on the pedestals (50); and
a joint process of joining the plurality of solar panel units (2, 3) together with a link joint rod (6), wherein
the alignment process, the installation process, and the joint process are sequentially performed, and
in the alignment process, laser light is caused to pass through the through holes (61) formed in the stakes (55) so that the pedestals (50) of the plurality of solar panel units (2, 3) are positioned.
